# EUROPEAN PATENT SPECIFICATION

(11) **EP 1 671 770 B1**
(45) Date of publication and mention of the grant of the patent: **21.03.2007**
(21) Application number: 06007035.6
(22) Date of filing: 17.06.2004
(51) Int. Cl.: B28D 1/14, B28D 1/30

(54) **Forward driving system for use in drilling masonry structures**
Vortriebsystem zur Anwendung beim Bohren von Mauerwerk
Système d'avancement utilisable dans le forage de maçonnerie

(30) Priority: 19.06.2003 GB 0314266
(43) Date of publication of application: 21.06.2006
(62) Divisional of application: 04253610.2
(73) Proprietor: Edscer, William George, Uckfield, East Sussex TN22 4BY (GB)
(72) Inventor: Edscer, William George, Uckfield, East Sussex TN22 4BY (GB)
(74) Representative: Lacey, Dean Andrew

(56) References cited:
- DE-A- 10 152 446
- DE-A- 19 810 806
- DE-C- 409 611
- DE-U1- 8 029 444
- FR-A- 881 843

## Description

The invention relates to a method of drilling through a masonry structure according to the preamble of claim 1 and a apparatus for drilling through the same according to the preamble of claim 4. Such a method and such an apparatus are known from DE 19810806 which discloses a jig for producing bores in walls of buildings. The invention is of particular application when drilling curved paths through masonry structures.

International patent application WO/0179649 (in the name of the present applicant) discloses various apparatus for drilling curved paths through masonry structures. The applicant has realised that one difficulty when drilling curved paths is that of providing the necessary reaction force for the drill to enable it to move forward through the masonry structure.

According to the invention there is provided a method of drilling through a masonry structure, according to claim 1.

The movement may be assisted by using the reaction force to propel the drilling means through the masonry structure, and/or to alter its direction of movement.

Further embodiments of the method are disclosed in the dependent claims 2 and 3.

According to the invention there is further provided an apparatus for drilling through a masonry structure according to claim 4.

Further embodiments of the apparatus are disclosed in the dependent claims 5 and 6.

Embodiments of the invention will be described for the purpose of illustration only with reference to the accompanying drawings in which:-
Fig. 1 is a diagrammatic sectional view of a first embodiment not according to the invention;
Fig. 2 is a diagrammatic sectional view of a second embodiment not according to the invention, with a detail of part of the reaction member enlarged;
Fig. 3 is a diagrammatic sectional view of a third embodiment not according to the invention;
Fig. 4 is a diagrammatic side view of a reaction member for use with the embodiment of Fig. 3;
Fig. 5 is a diagrammatic sectional view of a drill head for use in accordance with various embodiments of the invention;
Fig. 6A and 6B are front and side views of an alternative reaction member not according to the invention;
Fig. 7 is a diagrammatic sectional view of a drill according to a further embodiment not according to the invention;
Fig. 8A is a diagrammatic sectional view of a drill according to the invention; and Fig. 8B is an enlarged detail in sectional view of the piston of Fig. 8A; and
Fig. 9 illustrates in section the ends of various different shapes of reaction member not according to the invention.

The forward driving apparatus and method of invention is particularly applicable for use with the various drilling apparatus described in International patent application no. PCT/GB01/01735 (publication number WO/0179649). This patent application describes drilling apparatus which can be used to drill curved paths through masonry structures. Such apparatus is particularly useful for example when reinforcing curved masonry structures, such as masonry arched bridges. Using the drilling apparatus previously described, elongate bores may be drilled through such arched structures generally in line with the curvature of the arch, and reinforcing bars may be inserted in these bores. This method is described in patent no. GB 2,302,896, also in the name of the present applicant.

The applicant has realised that one difficulty when drilling a curved bore through a structure is that of providing the necessary reaction force to maintain the forward movement of the drill through the structure. Because of the curvature of the drilling path, it can be more difficult to provide such a reaction force down the shaft and therefore the masonry structure must be relied upon to provide the reaction force. However, such masonry structures are often relatively old and may not be sufficiently strong to provide this reaction force effectively. In addition, accurately controlling the direction of drilling can be difficult.

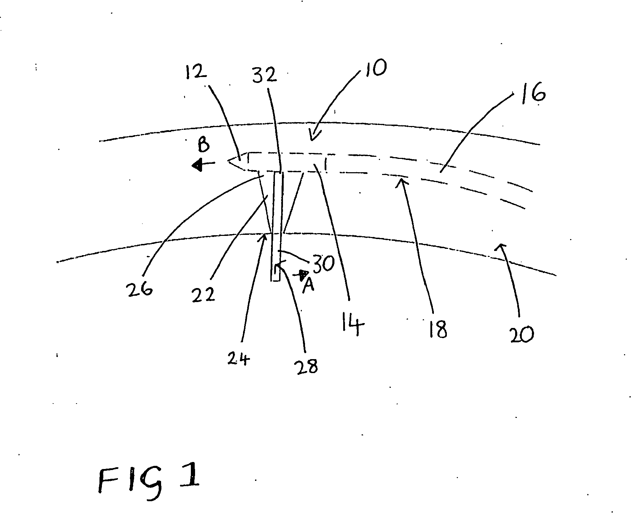

Referring to Fig. 1 not according to the invention, there is illustrated a drill 10 including a drill head 12, a drill body 14 and a flexible drive 16. The drill 10 is shown part way through drilling a curved bore 18 through a curved masonry structure 20.

The forwardly directed force keeping the drill moving through the masonry is provided partly by the drilling action of the drill bit in the masonry and partly by a driving force along the flexible drive 16. However, particularly if a hard piece of masonry is encountered, this force may not be sufficient, and the drill may cease its forward movement or may start to move in the wrong direction. When this occurs, the method and apparatus of the invention allows the drill to be propelled forward, as follows.

It may be seen that a slot 22 has been drilled into the masonry structure 20, from its underside 24. In the illustrated embodiment, the slot 22 is narrow where it first enters the masonry structure 20 but opens out in a wedge shape towards a wide part 26, where the slot meets the bore 18. However, the slot may have parallel sides, for example if mortar is simply removed from between bricks.

A reaction member in the form of a lever 28 is provided within the slot 22. The reaction member includes a lower part 30 which protrudes from the slot and an end part 32 which may engage the drill 10 as described below.

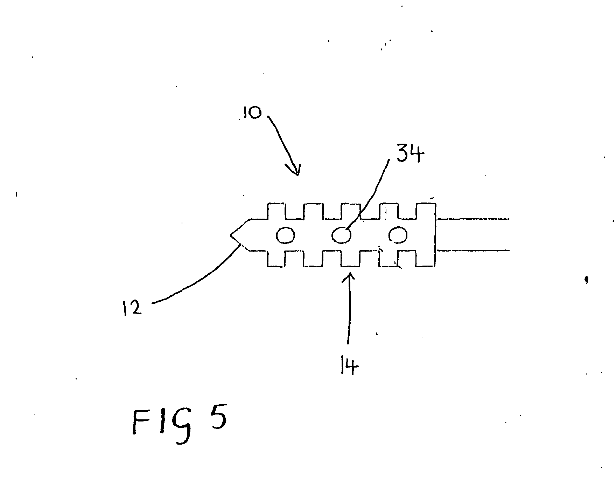

Referring to Fig. 5 not according to the invention, the drill body 14 is provided with a number of holes 34, of generally complementary shape to the end part 32 of the lever. The end part 32 of the lever may thus be inserted into one of the holes 34, to form an engagement between the lever 28 and the drill body 14. Referring again to Fig. 1 not according to the invention, with the drill 10 stationary the end part 34 is inserted into one of the holes 32, and the lower part 30 of the lever 28 is forced in the direction of the arrow A, causing the lever to pivot in the slot and urge the drill body 14 forwardly along its drilling path through the masonry structure (arrow B). The drill 10 may thereby be forced through any particularly hard areas of masonry, before normal drilling recommences. The drill may also be manipulated to change its direction if necessary.

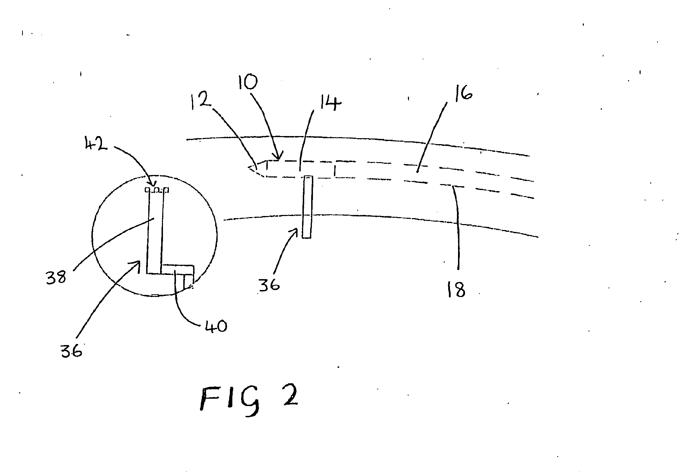

Referring to Fig. 2, there is illustrated a second embodiment not according to the invention. Parts corresponding to those shown in Fig. 1 are given the same reference numerals. In the Fig. 2 embodiment, the apparatus includes a reaction member in the form of a gear rod 36. The gear rod includes a hollow shaft 38 provided with a handle 40 at one of its ends and a gear 42 at its other end.

The drill body 14 includes grooves or threads which can engage the teeth of the gear 42 such that when the handle 40 is used to rotate the shaft 38 about its own axis, the movement of the gear 42 causes forward movement of the drill 10 through the masonry structure.

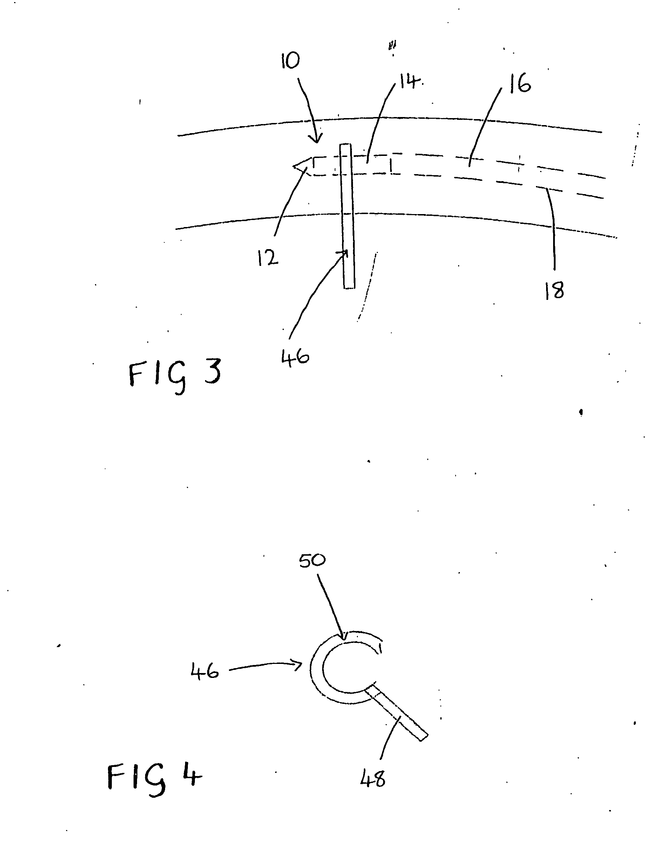

Referring to Figs. 3 and 4, there is illustrated a further embodiment not according to the invention in which corresponding parts are again given the same reference numerals. In this embodiment, a reaction member in the form of a threaded guide 46 is provided. The threaded guide 46 includes an elongate shaft 48 and a ring member 50 which is part-annular shaped and internally threaded. The drill 10 for use in this embodiment not according to the invention includes an external thread on its body 14 (not visible in Fig. 3). The internal thread on the ring member 50 is able to engage with the external thread on the drill head 12.

In this embodiment not according to the invention, the threaded guide is first inserted through a hole 52 in the masonry structure before the drill is advanced forward such that its drill head 12 passes through the ring member 50 of the threaded guide 46 and its threaded drill body 14 comes into engagement with the thread on the member 50. Continued slow rotation of the drill causes it to advance in the forward direction, with the engagement of the drill body 14 with the internal thread on the annular member 50 providing a forward reaction force to maintain the forward movement, and to control the direction.

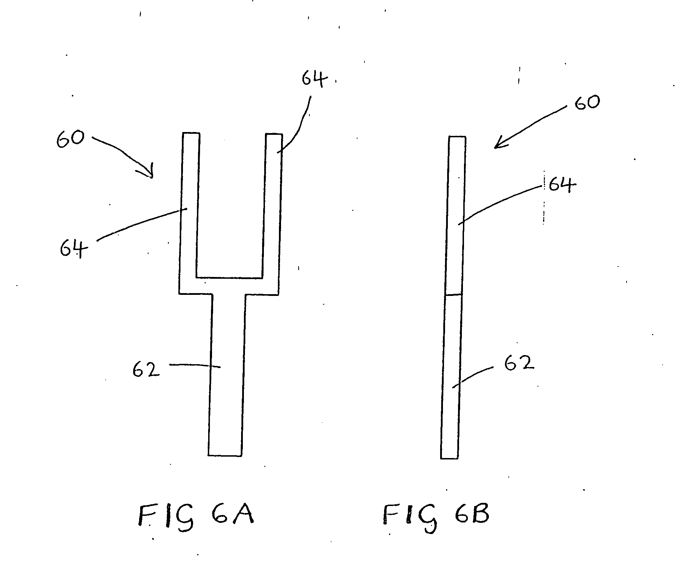

Referring to Figs 6A and 6B there is illustrated an alternative reaction member 60 not according to the invention. The reaction member 60 includes an elongate shaft 62 and two prongs 64. The prongs 64 are able to embrace and engage a drill head 12 or drill body 14. The reaction member 60 may then be manipulated to urge the drill forwards as described previously.

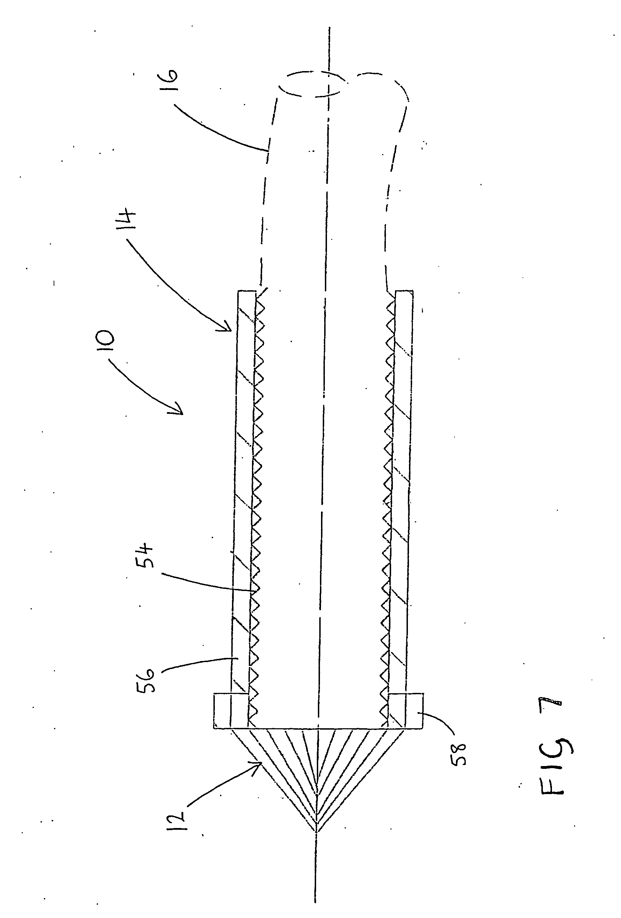

Fig. 7 illustrates an alternative embodiment of drill 10 not according to the invention. The drill 10 includes a drilling head 12, a drill body 14 and a flexible drive 16. The drill body 14 is provided with an external thread 54. A collar 56, which includes an internal thread, surrounds and engages the drill body 14. Thus in normal use the external thread of the drill body is not exposed.

The collar 56 further includes a retractable cam 58 similar to that described in more detail in earlier patent application number WO/0179649. When the drill 10 is used to drill normally through the masonry structure, its direction of rotation is such that the cam has no effect. However, if the drill is rotated in an opposite direction, the cam fouls against an internal wall of the bore drilled through the structure. This prevents further forward movement of the cam 58 and therefore the collar 56 until the drill direction is again reversed.

The drill of Fig. 7 not according to the invention may be used as follows. The drill 10 is used to drill through the structure in the normal way, with the drilling direction such that the cam remains in its neutral, inactive position. When the drill encounters a hard material such that an additional forward force is required, the drill initially stops. The direction of rotation may then be reversed to activate the cam 58 which secures the collar 56 in place within the bore. The drilling may then be resumed, using the opposite drilling direction to that used previously such that the cam 58 remains in engagement with the bore 18. This extends the drill body out in front of the collar, with the engagement of the cam against the internal walls of the drilling bore 18 causing the necessary reaction force. The drill 10 would include two shafts, an outer one to operate the cam 58 and an inner one to turn the drill head.

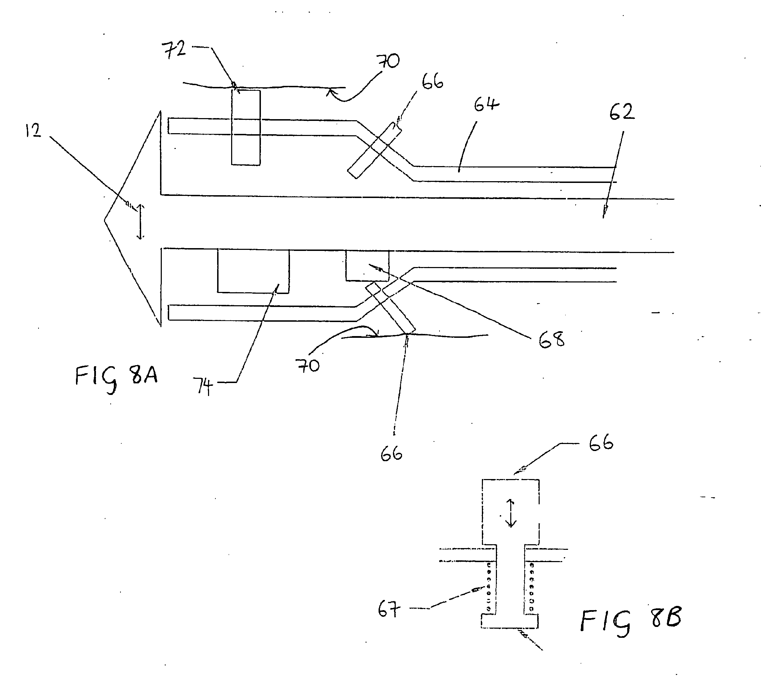

Figs. 8A and 8B illustrate a drill 10 according to the invention. The drill 10 includes a drilling head 12 and a flexible inner drive shaft 62 which drives the rotation of the head. The drilling head 12 may be rotated in either direction to drill through the structure. The drill 10 further includes an outer shaft 64, concentric with the shaft 62. The inner and outer shafts 62 and 64 may be caused to rotate together or independently.

The outer shaft 64 is provided with a reaction member in the form of a piston 66 (see the detailed view in Fig. 8B). The piston 66 is moveable between a passive position illustrated by the piston shown at the top of Fig. 8, and an active position illustrated by the piston shown at the bottom of Fig. 8. The piston is biased by a compression spring 67 (see Fig. 8B) into the passive position.

The inner shaft 62 is provided with a radial projection in the form of a cam 68. When the cam 68 is radially aligned with the piston 66, it causes the piston 66 to move from its passive position to its active position. As such movement takes place, the piston engages and pushes against an internal wall 70 of the bore.

The drill of Figs. 8A and 8B may be used as follows. The drill 10 is used to drill through the structure in the normal way, with the inner shaft 62 and outer shaft 64 being caused to rotate together. The relative positions of these shafts are such that the cam 68 does not engage the piston 66 and the piston 66 remains in its passive position. When the drill 10 encounters a hard material such that an additional forward force is required, the drill initially stops. At this time, the outer shaft 64 may be caused to stop rotating, and the inner shaft 62 rotated slowly, thereby causing relative moment of the inner and outer shafts. This brings the cam 68 into a position in which it pushes the piston 66 into its active position. This causes a reaction force against an inner wall 70 of the bore, thereby propelling the drill 10 forwards within the bore.

As an alternative or in addition to the piston 66, the drill 10 may be provided with a side piston 72 which may be caused by a cam 74 to extend outwardly against the inner wall 70 of the bore, thereby causing a sideways movement of the drill 10, to assist a change in direction.

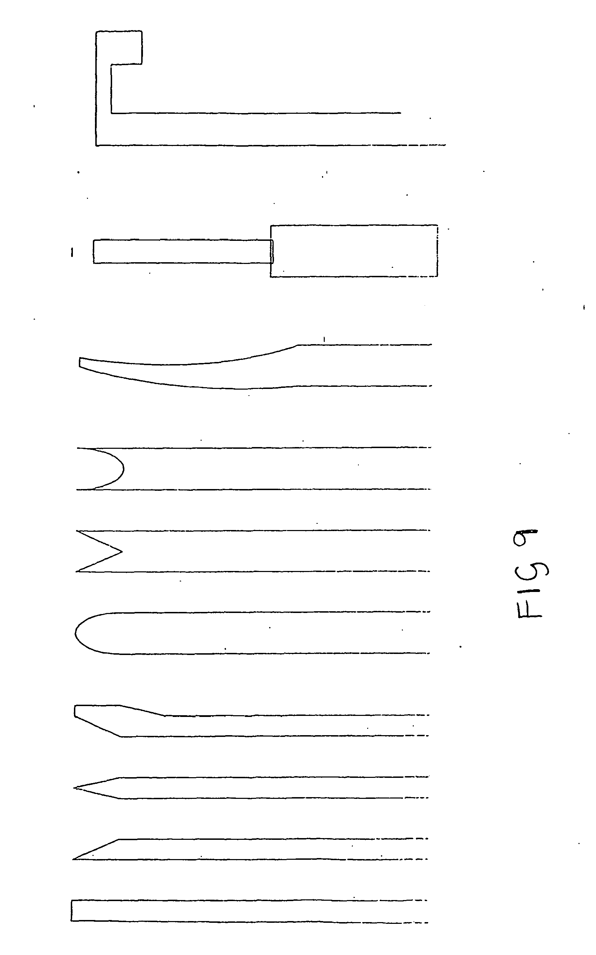

Various different shapes of reaction member end are illustrated in Fig. 9.

The flexible drive 16 may have a hollow centre for fluid supply to the drill head 12 and/or for waste removal from the drill head, or to contain cable, fibre optic or other communication cables. Internal tubing may be provided within the flexible drive 16 for air or fluid transfer to power the drill head, for hydraulic or air-powered motors.

The drilling head 12 may be steered by cams activated by the shaft or by pressure of water, air, gas, etc, or by pressure jets located in the head. Alternatively the drill head 12 may be steered by offset pilot drills in the main bore head or by radio controlled, X-ray, radar or similar guidance systems.

The drill head may further include radio controlled detection systems or may react with remote sensors on reaction members inserted in the masonry to allow the drill head to find and locate with the reaction member. The drill head may be powered by a drive motor incorporated in the head driven by air, water, electricity, etc. This may have radio, magnetic, electrical, air, water, gas, or fibre optic operated controls. It may relate with the reaction member to guide the drill head and provide feedback in the same way. The head may further communicate with a control centre by radio waves, electricity, fibre optics or through pressure plates/indicators/sensors to allow monitoring of the progress and location of the drill head. The drill head may alternatively communicate with the control centre through communication by a central cable located in the flexible drive shaft.

The reaction member may contain radio wave, radar, magnetic or electrical sensors and transmitter and locating devices to allow the plotting of each position. The reaction member may also provide guidance to drill head and remote operator by transmitting signals. The reaction member may be inserted into the masonry ahead of the drill head and may be used to inject glues, grouts or other materials, or to drain off water and waste materials. Further it may be used as an injection ports to facilitate material injection.

## Claims

1. A method of drilling through a masonry structure (20), the method including the steps of:
providing drilling means (10) which form part of a drill including a drilling head and a shaft attached thereto and using the drilling means to drill a bore (18) in the masonry structure (20);
providing a reaction member (66);
causing engagement of the reaction member (66) with the masonry structure (20) and with the drifting means (10) within the masonry structure (20), such that the reaction member (66) may provide a reaction force to assist the movement of the drilling means (10) through the structure as it drills the bore;
**characterised in that** the reaction member forms part of a drill including an inner shaft (62) and a concentric outer shaft (64), the shafts being selectively rotatable either together or independently, and the reaction member is provided on the outer shaft (64) and is moveable between a passive position and an active position in which it engages the masonry structure and provides the reaction force.

2. A method according to Claim 1 wherein in the active position, the reaction member (66) engages an inner wall of the bore, the reaction member is biased into the passive position and the method includes the step of moving the reaction member into the active position by causing relative movement of the inner and outer shafts.

3. A method according to Claim 2 wherein the inner shaft (62) is provided with a radially extending projection (68) capable of pushing the reaction member into the active position, and the method includes the step of causing relative movement of the inner and outer shafts to bring the radial protrusion into a position in which it pushes the reaction member into its active position.

4. An apparatus for drilling through a masonry structure (20), the apparatus including:
drilling means (10) which form part of a drill including a drilling head and a shaft attached thereto, for drilling a bore (18) in the masonry structure (20); and
a reaction member (66) adapted for engagement with the masonry structure and with the drilling means at a position within the masonry structure, to provide a reaction force to assist movement of the drilling means through the structure, as it drills the bore;
**characterised in that** the reaction member forms part of the drill, and the drill includes an inner shaft (62) and a concentric outer shaft (64), the shafts being selectively rotatable either together or independently, and the reaction member (66) is provided on the outer shaft (64) and is moveable between a passive position and an active position in which it engages the masonry structure and provides the reaction force.

5. An apparatus according to Claim 4 wherein the reaction member (66) is configured to engage an inner wall of the bore in the active position.

6. An apparatus according to Claim 5 wherein the reaction member (66) is biased into the passive position and the apparatus is configured such that the reaction member (66) is moved into the active position by causing relative movement of the inner (62) and outer shafts (64).

## Patentansprüche

1. Verfahren zum Bohren durch ein Mauerwerk (20), wobei das Verfahren die folgenden Schritte aufweist:
Bereitstellen von Bohrmitteln (10), die einen Teil eines Bohrers mit einem Bohrkopf und einer daran befestigten Welle bilden, und Verwenden der Bohrmittel zum Bohren einer Bohrung (18) in dem Mauerwerk (20);
Bereitstellen eines Reaktionsgliedes (66);
In-Eingriff-Bringen des Reaktionsgliedes (66) mit dem Mauerwerk (20) und mit den Bohrmitteln (10) innerhalb des Mauerwerks (20) derart, dass das Reaktionsglied (66) eine Reaktionskraft erzeugen kann, um die Bewegung der Bohrmittel (10) durch das Mauerwerk hindurch zu unterstützen, während es die Bohrung bohrt,
**dadurch gekennzeichnet, dass** das Reaktionsglied einen Teil eines Bohrers bildet, der eine innere Welle (62) und eine konzentrische äußere Welle (64) enthält, wobei die Wellen entweder miteinander oder unabhängig selektiv rotierbar sind, und dass das Reaktionsglied an der äußeren Welle (64) vorgesehen ist und beweglich ist zwischen einer passiven Position und einer aktiven Position, in der es mit dem Mauerwerk in Eingriff ist und die Reaktionskraft erzeugt.

2. Verfahren nach Anspruch 1, **dadurch gekennzeichnet, dass** in der aktiven Position das Reaktionsglied (66) mit einer inneren Wand der Bohrung in Eingriff ist, wobei das Reaktionsglied in die passive Position vorgespannt ist, und das Verfahren einen Schritt enthält, um das Reaktionsglied in die aktive Position zu bewegen, indem man eine Relativbewegung zwischen der inneren Welle und der äußeren Welle erzeugt.

3. Verfahren nach Anspruch 2, **dadurch gekennzeichnet, dass** die innere Welle (62) mit einem sich radial erstreckenden Vorsprung (68) ausgestattet ist, der das Reaktionsglied in die aktive Position schieben kann, und wobei das Verfahren einen Schritt enthält, um eine Relativbewegung zwischen der inneren und der äußeren Welle zu bewirken, um den radialen Vorsprung in eine Position zu bringen, in der er das Reaktionsglied in seine aktive Position schiebt.

4. Vorrichtung zum Bohren durch ein Mauerwerk (20), wobei die Vorrichtung aufweist:
Bohrmittel (10), die einen Teil eines Bohrers bilden, der einen Bohrkopf und eine daran befestigte Welle enthält, zum Bohren einer Bohrung (18) in das Mauerwerk (20); und
ein Reaktionsglied (66), das für einen Eingriff mit dem Mauerwerk und mit den Bohrmitteln an einer Position innerhalb des Mauerwerks ausgelegt ist, um eine Reaktionskraft zu erzeugen, um die Bewegung der Bohrmittel durch das Mauerwerk hindurch zu unterstützen, während es die Bohrung bohrt,
**dadurch gekennzeichnet, dass** das Reaktionsglied einen Teil des Bohrers bildet und der Bohrer eine innere Welle (62) und eine konzentrische äußere Welle (64) enthält, wobei die Wellen entweder miteinander oder unabhängig selektiv rotierbar sind, und wobei das Reaktionsglied (66) an der äußeren Welle (64) vorgesehen ist und beweglich ist zwischen einer passiven Position und einer aktiven Position, in der es mit dem Mauerwerk in Eingriff ist und die Reaktionskraft erzeugt.

5. Vorrichtung nach Anspruch 4, **dadurch gekennzeichnet, dass** das Reaktionsglied (66) so ausgelegt ist, dass es mit einer inneren Wand der Bohrung in der aktiven Position in Eingriff ist.

6. Vorrichtung nach Anspruch 5, **dadurch gekennzeichnet, dass** das Reaktionsglied (66) in die passive Position hin vorgespannt ist und die Vorrichtung so ausgelegt ist, dass das Reaktionsglied (66) in die aktive Position bewegt wird, indem man eine Relativbewegung zwischen der inneren Welle (62) und der äußeren Welle (64) erzeugt.

## Revendications

1. Procédé de perçage à travers une structure de maçonnerie (20), le procédé comprenant les étapes suivantes :
fournir des moyens de perçage (10) qui forment une partie d'un foret et comprennent une tête de perçage et un arbre fixé à celle-ci, et utiliser les moyens de perçage pour percer un alésage (18) dans la structure de maçonnerie (20) ;
fournir un élément de réaction (66) ;
provoquer la mise en prise de l'élément de réaction (66) avec la structure de maçonnerie (20) et avec les moyens de perçage (10) au sein de la structure de maçonnerie (20), de façon telle que l'élément de réaction (66) puisse fournir une force de réaction pour assister le déplacement des moyens de perçage (10) à travers la structure à mesure qu'ils percent l'alésage ;
**caractérisé en ce que** l'élément de réaction forme une partie d'un foret incluant un arbre intérieur (62) et un arbre extérieur concentrique (64), les arbres pouvant tourner de manière sélective soit ensemble soit indépendamment l'un de l' autre, et l'élément de réaction est prévu sur l'arbre extérieur (64) et peut se déplacer entre une position passive et une position active dans laquelle il vient en prise avec la structure de maçonnerie et fournit la force de réaction.

2. Procédé selon la revendication 1, dans lequel, dans la position active, l'élément de réaction (66) vient en prise avec une paroi intérieure de l'alésage, l'élément de réaction est incliné dans la position passive, et le procédé inclut l'étape consistant à déplacer l'élément de réaction dans la position active en provoquant un déplacement relatif entre les arbres intérieur et extérieur.

3. Procédé selon la revendication 2, dans lequel l'arbre intérieur (62) est doté d'une saillie (68) s'étendant radialement, capable de pousser l'élément de réaction dans la position active, et le procédé inclut l'étape consistant à provoquer un déplacement relatif des arbres intérieur et extérieur afin de faire passer la saillie radiale dans une position dans laquelle elle pousse l'élément de réaction dans sa position active.

4. Appareil de perçage à travers une structure de maçonnerie (20), l'appareil comprenant :
des moyens de perçage (10) qui forment une partie d'un foret comprenant une tête de perçage et un arbre fixé à celle-ci, afin de percer un alésage (18) dans la structure de maçonnerie (20) ; et
un élément de réaction (66) conçu de manière à venir en prise avec la structure de maçonnerie et avec les moyens de perçage à une position au sein de la structure de maçonnerie, afin de fournir une force de réaction pour assister le déplacement des moyens de perçage au travers de la structure au fur et à mesure qu'ils percent l'alésage;
**caractérisé en ce que** l'élément de réaction forme une partie du foret, et le foret inclut un arbre intérieur (62) et un arbre concentrique extérieur (64), les arbres pouvant tourner de manière sélective soit ensemble soit indépendamment l'un de l'autre, et l'élément de réaction (66) est prévu sur l'arbre extérieur (64) et peut se déplacer entre une position passive et une position active dans laquelle il vient en prise avec la structure de maçonnerie et fournit la force de réaction.

5. Appareil selon la revendication 4, dans lequel l'élément de réaction (66) est configuré de manière à venir en prise avec une paroi intérieure de l'alésage dans la position active.

6. Appareil selon la revendication 5, dans lequel l'élément de réaction (66) est incliné dans la position passive, et l'appareil est configuré de telle sorte que l'élément de réaction (66) se déplace dans la position active en provoquant un déplacement relatif des arbres intérieur (62) et extérieur (64).
